# FASCICULE DE BREVET EUROPEEN

(11) **EP 3 842 285 B1**
(45) Date de publication et mention de la délivrance du brevet: **05.10.2022**
(21) Numéro de dépôt: 20217245.8
(22) Date de dépôt: 24.12.2020
(51) Int. Cl.: B60N 2/70

(54) **NAPPE DE SUSPENSION ALLÉGÉE D'UNE ASSISE D'UN SIÈGE DE VÉHICULE**
LEICHTERE HÄNGENDE AUFLAGE FÜR SITZFLÄCHE EINES FAHRZEUGSITZES
LIGHT SUSPENSION SHEET FOR THE SITTING AREA OF A VEHICLE SEAT

(30) Priorité: 26.12.2019 FR 1915615
(43) Date de publication de la demande: 30.06.2021
(73) Titulaire: Renault s.a.s, 92100 Boulogne Billancourt (FR); Comatel Casuel, 01350 Beon (FR)
(72) Inventeur: BARRIERE, Hervé, 28410 Saint-Lubin-de-la-Haye (FR); REMACLE, Henri, 93330 NEUILLY SUR MARNE (FR); SOUVILLE, Philippe, 78180 Montigny le Bretonneux (FR)
(74) Mandataire: Ipsilon

(56) Documents cités:
- WO-A1-2004/016462
- WO-A1-2010/069411
- US-A- 3 326 601

## Description

La présente invention concerne une nappe de suspension allégée d'un siège de véhicule.

Un siège de véhicule comprend généralement une assise et un dossier, ainsi qu'une nappe de suspension placée dans l'assise et servant à assouplir l'assise lorsqu'une personne est assise sur ledit siège.

Actuellement, l'assise possède une structure comprenant une traverse avant et une traverse arrière qui sont parallèles, et la nappe de suspension possède des fils métalliques qui viennent s'accrocher aux deux traverses.

La demande FR3008874 se rapporte à un siège de véhicule comprenant une armature rigide destinée à être fixée audit véhicule et au moins un élément de suspension présentant une raideur qui varie en fonction d'un allongement de l'élément de suspension. Le siège comprend en outre des moyens permettant de régler la tension de l'élément de suspension. Le document WO2004016462 décrit un autre siège de véhicule comprenant une poche et un mécanisme de tension.

Une nappe de suspension d'une assise d'un siège de véhicule selon l'invention est dimensionnée pour alléger ledit siège et assurer une fonction supplémentaire de support de certains câblages.

L'invention a pour objet une nappe de suspension d'une assise d'un siège de véhicule.

Selon l'invention, la nappe de suspension comprend un film plastique, un profil d'accrochage avant et un profil d'accrochage arrière surmoulés dans ledit film, la nappe comportant une poche en plastique dotée d'au moins une ouverture et fixée au film en ménageant entre eux un espace pour permettre à au moins un câblage de passer entre ledit film et ladite poche par ladite au moins une ouverture. De cette manière, la nappe de suspension a une double fonction, l'une habituelle qui est d'assouplir l'assise, et l'autre plus originale qui est de faciliter le parcours des câblages sous l'assise. Cette nappe permet ainsi de servir de support à ces câblages en évitant d'avoir à les plier exagérément et donc de les mettre sous contrainte. La poche et le film peuvent être réalisés dans le même matériau, ou dans des matériaux différents. La fixation de la poche au film peut par exemple être réalisée par collage ou par soudure.

Avantageusement, la poche est assimilable à une feuille qui serait placée contre le film en ménageant avec celui-ci un espace. L'ouverture de la poche peut être réalisée à l'intérieur de la poche ou sur l'un des bords de ladite poche.

La fabrication de la nappe de suspension peut être réalisée :
- soit en surmoulant d'abord les deux profils d'accrochage dans le film plastique, puis en fixant la poche au film plastique,
- soit en fixant d'abord la poche au film, puis en surmoulant les deux profils d'accrochage dans le film plastique.

Les câblages sont préférentiellement des câblages électriques. Lorsque le siège est monté dans un véhicule, la poche est fixée au film en étant placée sous ledit film.

Selon une caractéristique possible de l'invention, la poche comprend au moins deux ouvertures, l'une servant d'entrée audit au moins un câblage et l'autre servant de sortie audit câblage. De cette manière, l'espace entre la poche et le film constitue un passage pour un câblage donné, avec une entrée et une sortie pour ledit câblage.

Selon une caractéristique possible de l'invention, le film ne comprend aucune ouverture de sorte que ledit au moins un câblage chemine entre la poche et le film sans traverser ledit film. Il est important que le film demeure homogène et continu pour assurer un bon assouplissement de l'assise, sans risque de se rompre ou de se distendre. La poche vient se greffer directement sur le film plastique déjà existant sans avoir à modifier la structure de ce film.

Selon une caractéristique possible de l'invention, la poche est de forme rectangulaire dont les quatre coins ont été retirés de sorte que ladite poche est délimitée par quatre bords rectilignes et discontinus, ladite poche étant fixée au film au niveau desdits bords. Pour cette configuration, la nappe comprenant le film et la poche possède quatre ouvertures correspondant aux quatre échancrures crées lors de l'enlèvement des quatre coins. Chaque échancrure peut indifféremment constituer une entrée ou une sortie pour les câblages amenés à passer entre le film et ladite poche. Les quatre bords rectilignes discontinus s'inscrivent dans un rectangle. Le terme « retiré » est une image signifiant que la poche est rectangulaire et qu'elle est dépourvue de ses quatre coins.

Selon une caractéristique possible de l'invention, le film est de forme rectangulaire, les dimensions de la poche étant égales à celles du film de sorte que les bords rectilignes de la poche arasent les bords extérieurs du film. Ainsi, l'espace crée entre la poche et le film possède une surface maximale.

Selon une caractéristique possible de l'invention, la poche est soudée au film plastique. Il s'agit d'un exemple illustratif et non pas limitatif d'une technique de fixation de la poche au film plastique.

Selon une caractéristique possible de l'invention, le profil d'accrochage avant est une barre comprenant quatre crochets destinés à venir se placer sur une traverse avant de la structure d'assise.

Selon une caractéristique possible de l'invention, le profil d'accrochage arrière est une barre comprenant quatre portions incurvées destinées à venir se placer sur une traverse arrière de la structure d'assise. La barre du profil d'accrochage avant et la barre du profil d'accrochage arrière sont parallèles sur le film plastique.

L'invention a pour autre objet une assise d'un siège de véhicule comprenant une traverse avant et une traverse arrière parallèles.

Selon l'invention, l'assise comprend une nappe de suspension conforme à l'invention, la nappe de suspension étant montée dans ladite assise de sorte que le profil d'accrochage avant se fixe à la traverse avant et le profil d'accrochage arrière se fixe à la traverse arrière en mettant le film sous tension, et de sorte que la poche soit placée sous le film plastique.

Une nappe de suspension selon l'invention présente l'avantage d'être allégée par rapport aux nappes de suspension existantes impliquant des fils métalliques, car elle met en œuvre un film plastique à la place desdits fils. Elle a de plus l'avantage de pouvoir être montée facilement et rapidement, grâce notamment à la présence de seulement deux éléments d'accrochage monobloc et étendus, destinés à remplacer chacun plusieurs fils métalliques dont chacun doit être inséré dans un trou de la structure d'assise. Enfin, elle présente l'avantage de posséder deux fonctions, l'une permettant d'assouplir l'assise et l'autre permettant de créer des passages pour différents câblages sous le siège, tout en demeurant d'un encombrement constant.

On donne ci-après, une description détaillée d'un mode de réalisation préféré d'une nappe de suspension selon l'invention, en se référant aux figures suivantes :
[fig.1] représente une vue en perspective d'une nappe de suspension existante réalisée à partir de fils métallique,
[fig.2] représente une vue en perspective d'une nappe de suspension existante réalisée à partir d'un film plastique,
[fig.3] représente une vue de face d'un ensemble constitué par un film plastique et une poche plastique pour la réalisation d'une nappe de suspension selon l'invention,
[fig.4] représente une vue de face d'un premier mode de réalisation d'une nappe de suspension selon l'invention,
[fig.5] représente une vue de face d'un deuxième mode de réalisation d'une nappe de suspension selon l'invention,
[fig.6] représente une vue en perspective d'une structure d'assise et d'une nappe de suspension d'un siège déjà existant montrant différents câblages électriques
[fig.7] représente une vue en perspective des différents câblages de la figure 6 et destinés à passer sous l'assise d'un siège de véhicule,
[fig.8] représente une vue en perspective du dessous d'une assise de siège selon l'invention.

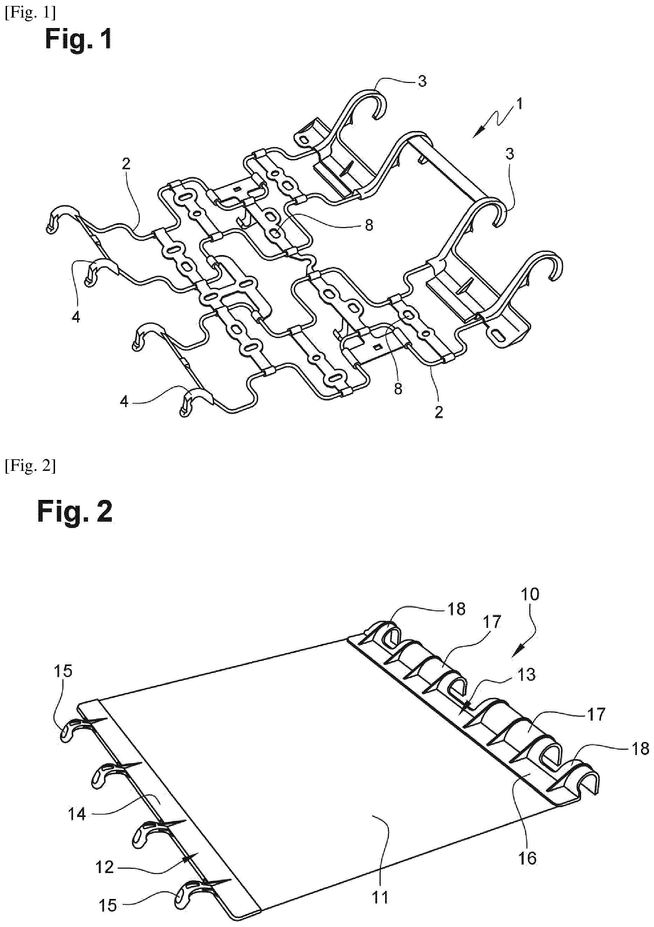

En se référant à la figure 1, une nappe de suspension 1 d'une assise d'un siège selon l'état de la technique, comprend des fils métalliques 2, dont chacun possède une extrémité arrière 3 recourbée destinée à venir reposer sur une traverse arrière d'une structure d'assise, qui est généralement de forme cylindrique. Chacun des fils métalliques 2 comprend également une extrémité avant 4, destinée à être insérée dans un orifice d'une traverse avant de la structure d'assise. Selon un mode de réalisation particulier, la nappe de suspension 1 comprend quatre fils métalliques 2 et la traverse avant comprend quatre orifices destinés chacun à recevoir l'extrémité avant 4 d'un fil métallique 2, lesdits orifices étant alignés suivant un axe horizontal.

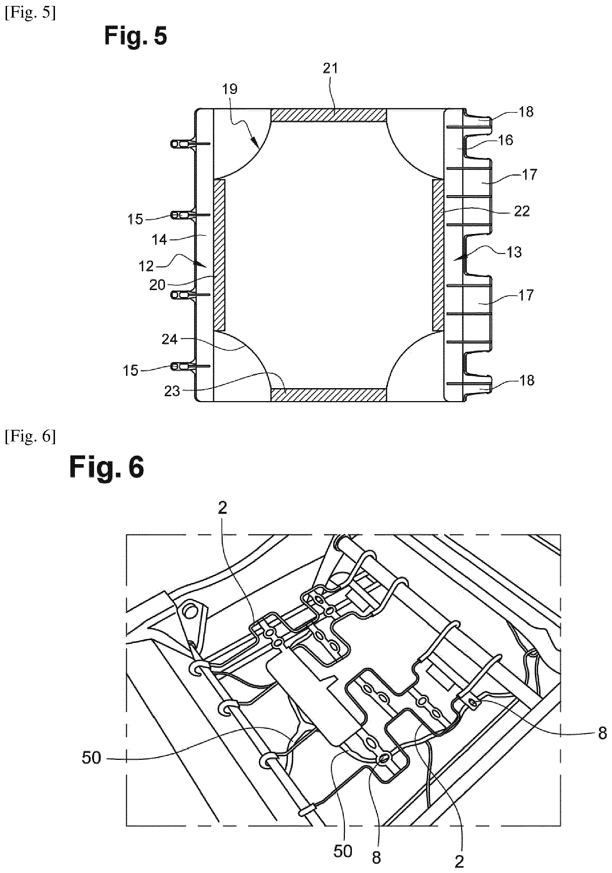

En se référant à la figure 6, chaque fil métallique 2 comprend des orifices 8 destinés au passage d'agrafes dans le but de fixer des câblages électriques 50 cheminant sous l'assise du siège.

L'assise d'un tel siège est lourde en raison de la présence de fils métalliques 2, et demeure assez compliquée à monter car il faut notamment insérer l'extrémité avant 4 de chaque fil métallique 2 dans un orifice de la traverse avant. De plus elle est longue à monter, car il faut fabriquer d'un côté la nappe de suspension 1 puis la fixer à la structure d'assise, et de l'autre côté la matelassure qu'il faut ensuite déposer sur ladite nappe 1.

Afin de résoudre les problèmes ci-avant mentionnés, la nappe de suspension 1 ci-avant décrite a été transformée en une nappe de suspension 10 allégée, comprenant un film plastique 11 de suspension de forme rectangulaire, un profil d'accrochage avant 12 et un profil d'accrochage arrière 13, lesdits deux profils 12, 13 étant surmoulés dans ledit film de suspension 11. Le profil d'accrochage avant 12 comprend une barre 14 de faible épaisseur dotée de quatre crochets 15 régulièrement espacés le long de ladite barre 14. La barre 14 et les crochets 15 représentent une seule et même pièce préférentiellement obtenue par moulage. Le profil d'accrochage arrière 13 comprend une barre 16 de faible épaisseur dotée de quatre tronçons 17, 18 incurvés, dont deux tronçons 17 sont identiques et allongés et dont deux tronçons 18 sont identiques et raccourcis. Les tronçons 17, 18 sont répartis le long de la barre 16 de sorte que les deux tronçons raccourcis soient placés aux deux extrémités de ladite barre 16, lesdits deux tronçons raccourcis 17 encadrant les deux tronçons allongés 17. Les deux profils d'accrochage 12, 13 sont surmoulés dans le film plastique 11 de sorte que les deux barres 14, 16 qui les composent soient parallèles et positionnés le long de deux bords parallèles dudit film plastique 11. Le film plastique 11 peut par exemple être réalisé en polyester, tel que du PBT (Polytéréphtalate de butylene).

Lorsque la nappe de suspension 10 est placée dans l'assise 25 du siège, les crochets 15 du profil d'accrochage avant 12 viennent s'insérer dans des orifices d'une traverse avant de la structure d'assise et les tronçons 17, 18 incurvés du profil d'accrochage arrière 13 viennent reposer sur une traverse arrière de ladite structure d'assise. Le film plastique 11 se retrouve alors en tension et permet ainsi d'assouplir l'assise 25 du siège.

Or, avec une telle nappe de suspension allégée 10, se pose le problème du passage des différents câblages sous l'assise du siège, qui était initialement résolu avec les orifices 8 des fils métalliques 2 des nappes de suspension métalliques existantes et dans lesquels sont destinées à être insérées des agrafes pour la fixation desdits câblages 50.

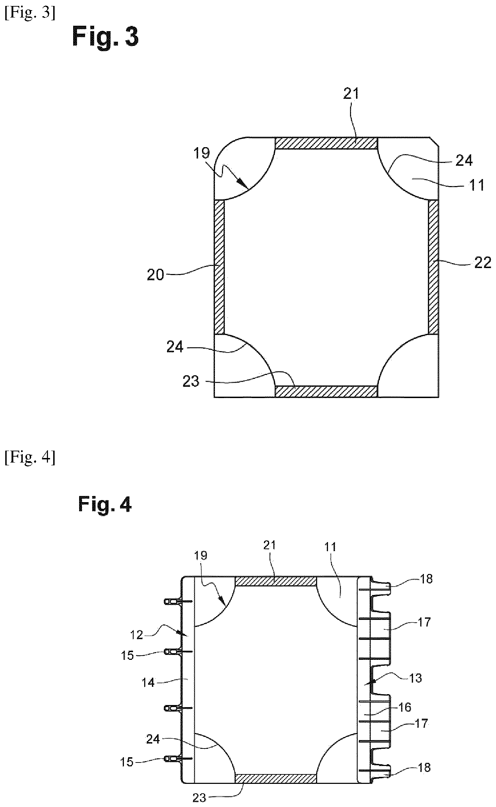

En se référant aux figures 3, 4 et 5, le problème du passage des différents câblages sous une assise de siège comprenant la nappe de suspension allégée 10 décrite ci-avant, est résolu au moyen d'une poche 19 qui vient se fixer audit film 11.

Dans l'exemple considéré, en se référant à la figure 3, la poche 19 est assimilable à une feuille de forme rectangulaire, dont les quatre coins ont été retirés au moyen d'une coupe incurvée. De cette manière, la poche 19 est délimitée par quatre bords 20, 21, 22, 23 rectilignes et discontinus, deux bords consécutifs étant reliés l'un à l'autre par un bord incurvé 24. Ces quatre bords 20, 21, 22, 23 discontinus sont inscrits dans un rectangle. Les dimensions de la poche 19 sont égales à celles du film plastique 11, de sorte que les quatre bords rectilignes 20, 21, 22, 23 de la poche 19 viennent araser les bords extérieurs du film plastique 11. Préférentiellement, la poche 19 est réalisée en matière plastique qui est, soit identique à celle du film 11, soit différente de celle dudit film 11. La poche 19 est fixée au film 11 par soudure uniquement le long des quatre bords rectilignes 20, 21, 22, 23 de ladite poche 19, si bien que l'ensemble obtenu comprend quatre ouvertures situées au niveau des quatre bords incurvés 24 de la poche 19 reliant lesdits bords rectilignes 20, 21, 22, 23. La poche 19 ainsi fixée au film 11 ménage avec celui-ci un espace interne débouchant sur les quatre ouvertures. Il est aisé d'imaginer qu'un câblage 50 puisse entrer par l'une des ouvertures, puis traverser l'espace interne, pour finalement en ressortir par une autre sortie.

En se référant à la figure 4, la poche 19 peut d'abord être fixée au film 11 avant que les deux profils d'accrochage avant et arrière 12, 13 ne soient surmoulés dans ledit film 11.

En se référant à la figure 5, les deux profils d'accrochage avant et arrière 12, 13 sont d'abord surmoulés 13 dans le film 11 avant que la poche 19 ne vienne se souder sur ledit film entre lesdits deux profils d'accrochage 12, 13.

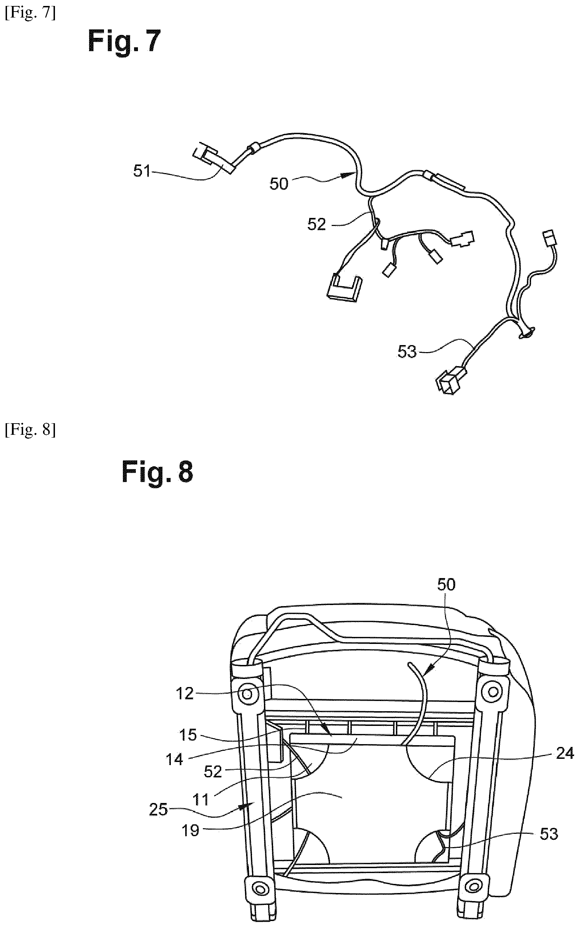

En se référant à la figure 8, lorsque la nappe de suspension allégée 10 est montée dans l'assise 25 du siège, elle s'étend dans un plan sensiblement horizontal lorsque le véhicule repose sur un sol horizontal, la poche 19 étant positionnée sous le film plastique 11.

La figure 7 illustre un exemple d'un câblage électrique 50 pouvant se situer sous l'assise 25 d'un siège de véhicule. Une extrémité 51 de ce câblage 50 se branche à un connecteur d'arrivée de courant électrique, ledit câblage 50 se divisant en plusieurs faisceaux 52, 53 destinés à alimenter en courant, différents équipements électriques.

En se référant à la figure 8, le câblage 50 ainsi que les différents faisceaux 52, 53 qui le composent passent notamment dans l'espace situé entre la poche 19 et le film plastique 11 en entrant dans cet espace par l'une des quatre ouvertures ménagées entre ladite poche 19 et ledit film 11, et en sortant de celui-ci par une autre ouverture.

La nappe de suspension allégée 10 dotée de sa poche 19 va servir de passage et de support à différents câblages 50 électriques cheminant sous le siège, empêchant d'avoir à les plier exagérément et donc à trop les contraindre.

Il faut signaler que la poche 19 doit être légère et peu encombrante, afin de ne pas alourdir le véhicule et de ne pas avoir une quelconque influence néfaste sur le film plastique 11 de la nappe de suspension 10. Le terme « peu encombrante » signifie que les dimensions de la poche 19 doivent être inférieures à celles du film 11 pour ne pas déborder de celui-ci.

## Revendications

1. Nappe de suspension (1, 10) d'une assise (25) d'un siège de véhicule, **caractérisée en ce qu'**elle comprend un film plastique (11), un profil d'accrochage avant (12) et un profil d'accrochage arrière (13) surmoulés dans ledit film (11), et **en ce que** la nappe (10) comporte une poche (19) en plastique dotée d'au moins une ouverture (24) et fixée au film (11) en ménageant entre eux un espace pour permettre à au moins un câblage (50, 52, 53) de passer entre ledit film (11) et ladite poche (19) par ladite au moins une ouverture (24).

2. Nappe de suspension selon la revendication 1, **caractérisée en ce que** la poche (19) comprend au moins deux ouvertures (24), l'une servant d'entrée audit au moins un câblage (50, 52, 53) et l'autre servant de sortie audit câblage (50, 52, 53).

3. Nappe de suspension selon la revendication 2, **caractérisée en ce que** le film (11) ne comprend aucune ouverture de sorte que ledit au moins un câblage (50, 52, 53) chemine entre la poche (29) et le film (11) sans traverser ledit film (11).

4. Nappe de suspension selon l'une quelconque des revendications 2 ou 3, **caractérisée en ce que** la poche (19) est de forme rectangulaire dont les quatre coins ont été retirés, de sorte que ladite poche (19) est délimitée par quatre bords (20, 21, 22, 23) rectilignes et discontinus, et **en ce que** ladite poche (19) est fixée au film (11) par lesdits bords (20, 21, 22, 23).

5. Nappe de suspension selon la revendication 4, **caractérisée en ce que** le film (11) est de forme rectangulaire, et **en ce que** les dimensions de la poche (19) sont égales à celles du film (11) de sorte que les bords rectilignes (20, 21, 22, 23) de la poche (19) arasent les bords extérieurs du film (11).

6. Nappe de suspension selon l'une quelconque des revendications 4 ou 5, **caractérisée en ce que** la poche (19) est soudée au film plastique (11).

7. Nappe de suspension selon l'une quelconque des revendications 1 à 6, **caractérisée en ce que** le profil d'accrochage avant (12) est une barre (14) comprenant quatre crochets (15) destinés à venir se placer sur une traverse avant de la structure d'assise.

8. Nappe de suspension selon l'une quelconque des revendications 1 à 7, **caractérisée en ce que** le profil d'accrochage arrière (13) est une barre (16) comprenant quatre portions incurvées (17, 18) destinées à venir se placer sur une traverse arrière de la structure d'assise.

9. Nappe de suspension (10) selon l'une quelconque des revendications 1 à 8, **caractérisée en ce que** la poche (19) est une feuille en plastique qui s'étend parallèlement au film (11).

10. Assise (25) de siège comprenant une barre avant et une barre arrière, **caractérisée en ce qu'**elle comprend une nappe de suspension conforme à l'une quelconque des revendications 1 à 9, et **en ce que** ladite nappe de suspension est montée dans la l'assise de sorte que le profil d'accrochage avant (12) se fixe à la barre avant et le profil d'accrochage arrière (13) se fixe à la barre arrière en mettant le film (11) sous tension, et de sorte que la poche (19) soit placée sous ledit film (11).

## Patentansprüche

1. Hängende Auflage (1, 10) für Sitzfläche (25) eines Fahrzeugsitzes, **dadurch gekennzeichnet, dass** sie eine Kunststofffolie (11), ein vorderes Aufhängeprofil (12) und ein hinteres Aufhängeprofil (13) umfasst, die in der Folie (11) aufgeformt sind, und dadurch, dass die Auflage (10) einen Beutel (19) aus Kunststoff umfasst, der mit mindestens einer Öffnung (24) dotiert und an die Folie (11) befestigt ist, indem zwischen ihnen eine Raum eingerichtet ist, um zu ermöglichen, dass mindestens eine Verkabelung (50, 52, 53) zwischen der Folie (11) und dem Beutel (19) durch die mindestens eine Öffnung (24) verläuft.

2. Hängende Auflage nach Anspruch 1, **dadurch gekennzeichnet, dass** der Beutel (19) mindestens zwei Öffnungen (24) umfasst, wobei die eine als Eingang für die mindestens eine Verkabelung (50, 52, 53) dient und die andere als Ausgang für die Verkabelung (50, 52, 53) dient.

3. Hängende Auflage nach Anspruch 2, **dadurch gekennzeichnet, dass** der Film (11) keine Öffnung umfasst, so dass die mindestens eine Verkabelung (50, 52, 53) zwischen dem Beutel (29) und der Folie (11) verläuft, ohne die Folie (11) zu queren.

4. Hängende Auflage nach einem der Ansprüche 2 oder 3, **dadurch gekennzeichnet, dass** der Beutel (19) eine rechtwinklige Form aufweist, wobei die vier Ecken zurückgezogen wurden, so dass der Beutel (19) von vier geradlinigen und nicht kontinuierlichen Rändern (20, 21, 22, 23) begrenzt ist, und dadurch, dass der Beutel (19) an die Folie (11) durch die Ränder (20, 21, 22, 23) befestigt ist.

5. Hängende Auflage nach Anspruch 4, **dadurch gekennzeichnet, dass** die Folie (11) eine rechtwinklige Form aufweist, und dadurch, dass die Abmessungen des Beutels (19) an diejenigen der Folie (11) angeglichen sind, so dass die rechtwinkligen Ränder (20, 21, 22, 23) des Beutels (19) die äußeren Ränder der Folie (11) abgleichen.

6. Hängende Auflage nach einem der Ansprüche 4 oder 5, **dadurch gekennzeichnet, dass** der Beutel (19) an die Kunststofffolie (11) geschweißt ist.

7. Hängende Auflage nach einem der Ansprüche 1 oder 6, **dadurch gekennzeichnet, dass** das vordere Aufhängeprofil (12) eine Stange (14) ist, umfassend vier Haken (15), die ausgelegt sind, um auf einem Querträger vor der Sitzflächenstruktur platziert zu sein.

8. Hängende Auflage nach einem der Ansprüche 1 oder 7, **dadurch gekennzeichnet, dass** das hintere Aufhängeprofil (13) eine Stange (16) ist, die vier gekrümmte Abschnitte (17, 18) umfasst, die ausgelegt sind, um auf einem hinteren Querträger der Sitzflächenstruktur platziert zu sein.

9. Hängende Auflage (10) nach einem der Ansprüche 1 bis 8, **dadurch gekennzeichnet, dass** der Beutel (19) eine Kunststoffplatte ist die sich parallel zur Folie (11) erstreckt.

10. Sitzfläche (25) eines Sitzes, umfassend eine vordere Stange und eine hintere Stange, **dadurch gekennzeichnet, dass** sie eine hängende Auflage nach einem der Ansprüche 1 bis 9 umfasst, und dadurch, dass die hängende Auflage in der Sitzfläche derart montiert ist, dass das vordere Aufhängeprofil (12) an der vorderen Stange befestigt ist und das hintere Aufhängeprofil (13) an der hinteren Stange befestigt ist, indem es die Folie (11) spannt, und derart, dass der Beutel (19) unter der Folie (11) platziert ist.

## Claims

1. A suspension mat (1, 10) for a seat cushion (25) of a vehicle seat,
**characterized in that** same comprises a plastic sheet (11), a front hooking profile (12)
and a rear hooking profile (13) overmolded in said sheet (11), and **in that** the mat (10) includes a plastic pocket (19) with at least one opening (24) and attached to the sheet (11) by providing a space therebetween for allowing wiring (50, 52, 53) to be fed between said sheet (11) and said pocket (19) through said at least one opening (24).

2. The suspension mat according to claim 1, **characterized in that** the
pocket (19) comprises at least two openings (24), one opening serving as an inlet for said at least one wiring (50, 52, 53) and the other opening serving as an outlet for said wiring (50, 52, 53).

3. The suspension mat according to claim 2, **characterized in that** the sheet (11) does not comprise any opening so that said at least one wiring (50, 52, 53) runs between the pocket (29) and the sheet (11) without crossing said sheet (11).

4. The suspension mat according to any of claims 2 or 3, **characterized in that** the pocket (19) has a rectangular shape, the four corners of which have been removed, so that said pocket (19) is delimited by four rectilinear and discontinuous edges (20, 21, 22, 23), and **in that** said pocket (19) is attached to the sheet (11) by said edges (20, 21, 22, 23).

5. The suspension mat according to claim 4, **characterized in that** the sheet (11) has a rectangular shape, and **in that** the dimensions of the pocket (19) are equal to the dimensions of the sheet (11) so that the rectilinear edges (20, 21, 22, 23) of the pocket (19) are flush with the outer edges of the sheet (11).

6. The suspension mat according to any of claims 4 or 5, **characterized in that** the pocket (19) is welded to the plastic sheet (11).

7. The suspension mat according to any of claims 1 to 6, **characterized in that** the front hooking profile (12) is a bar (14) comprising four hooks (15) intended for being placed on a front crosspiece of the seat structure.

8. The suspension mat according to any of claims 1 to 7, **characterized in that** the rear hooking profile (13) is a bar (16) comprising four curved portions (17, 18) intended for being placed on a rear crosspiece of the seat structure.

9. The suspension mat (10) according to any of claims 1 to 8 **characterized in that** the pocket (19) is a plastic sheet which extends parallel to the sheet (11).

10. A seat cushion (25) comprising a front bar and a rear bar, **characterized in that** same comprises a suspension mat according to any of claims 1 to 9, and **in that** said suspension mat is mounted in the seat cushion so that the front hooking profile (12) attaches onto the front bar and the rear hooking profile (13) attaches onto the rear bar by tensioning the sheet (11), and so that the pocket (19) is placed under said sheet (11).
